# EUROPEAN PATENT APPLICATION

(11) **EP 2 413 595 A1**
(43) Date of publication of application: **01.02.2012**
(21) Application number: 11164910.9
(22) Date of filing: 05.05.2011
(51) Int. Cl.: H04N 5/76, G11B 27/00

(54) **Image playback apparatus and image playback method**

(30) Priority: 30.07.2010 JP 2010172936
(71) Applicant: Kabushiki Kaisha Toshiba, Tokyo 105-8001 (JP)
(72) Inventor: Nishimura, Hayato, Tokyo 105-8001 (JP)
(74) Representative: HOFFMANN EITLE

(57) **Abstract**

According to one embodiment, an image playback apparatus includes a connector (29) and a forming module (22). The connector (29) is configured to enable connection of a recording medium (30, 32, 36) that records image content and attribute information thereof in different folders in conformance with the moving picture image content recording standard. The forming module (22) is configured to form a list in which various image content items recorded on the recording medium (30, 32, 36) are classified based on attribute information recorded in a preset folder of the recording medium (30, 32, 36).

## Description

Embodiments described herein relate generally to an image playback apparatus and image playback method that play back image content recorded in conformance with a high-quality moving picture recording standard by use of a video camera.

As is well known in the art, in recent years, various types of standards are provided in order to photograph and record high-quality moving pictures by use of a home video camera. With this type of standard, high-quality moving pictures can be satisfactorily recorded on a recording medium of small capacity by subjecting image content to a highly efficient compression coding process.

In the present high-quality moving picture recording standard, the types of recording media used as to-be-recorded objects are limited and it is often complicated for the user to deal with the apparatus since the recording medium is configured to separately record the recording file of image content and the recording file of attribute information and management information thereof in different folders.

A general architecture that implements the various features of the embodiments will now be described with reference to the drawings. The drawings and the associated descriptions are provided to illustrate the embodiments and not to limit the scope of the invention.
FIG. 1 is a block configuration diagram for illustrating one example of a signal processing system of a digital television broadcast reception apparatus in one embodiment.
FIG. 2 is an outer appearance view for illustrating one example of a remote controller used in the digital television broadcast reception apparatus in the above embodiment.
FIG. 3 is a diagram for illustrating one example of a folder configuration in conformance with an AVCHD standard in the above embodiment.
FIG. 4 is a flowchart for illustrating one example of a main processing operation performed by the digital television broadcast reception apparatus in the above embodiment.
FIG. 5 is a view for illustrating one example of a content selection screen displayed on the digital television broadcast reception apparatus in the above embodiment.
FIG. 6 is a view for illustrating one example of a device selection screen displayed on the digital television broadcast reception apparatus in the above embodiment.
FIG. 7 is a view for illustrating one example of an AVCHD selection screen displayed on the digital television broadcast reception apparatus in the above embodiment.
FIG. 8 is a view for illustrating one example of a date-classified list display screen displayed on the digital television broadcast reception apparatus in the above embodiment.
FIG. 9 is a view for illustrating one example of a time-classified list display screen displayed on the digital television broadcast reception apparatus in the above embodiment.

Various embodiments will be described hereinafter with reference to the accompanying drawings. In general, according to one embodiment, an image playback apparatus comprises a connector and a forming module. The connector is configured to enable connection of a recording medium that records image content and attribute information thereof in different folders in conformance with the moving picture image content recording standard. The forming module is configured to form a list in which various image content items recorded on the recording medium are classified based on attribute information recorded in a preset folder of the recording medium.

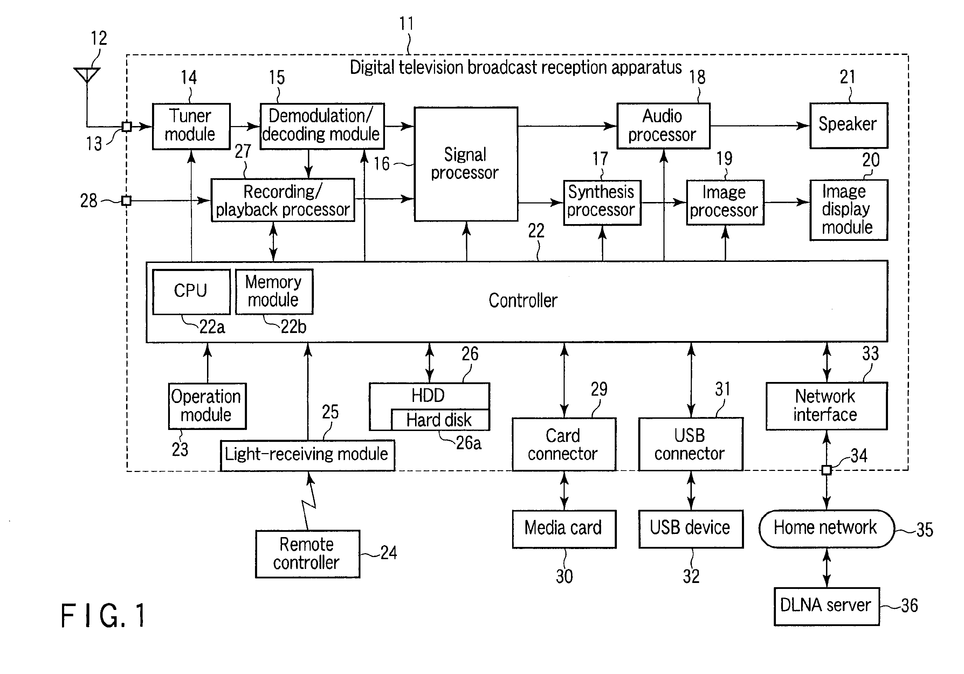

FIG. 1 schematically shows a signal processing system of a digital television broadcast reception apparatus 11 used as the image playback apparatus explained in this embodiment. That is, a digital television broadcast signal received by means of an antenna 12 is supplied to a tuner module 14 via an input terminal 13 and a broadcast signal of a desired channel is selected. The broadcast signal selected by means of the tuner module 14 is supplied to a demodulation/decoding module 15 and restored to a digital image signal, audio signal or the like and then output to a signal processor 16.

The signal processor 16 subjects the digital image signal and audio signal supplied from the demodulation/decoding module 15 to respective preset digital signal processes. Then, the signal processor 16 outputs the digital image signal to a synthesis processor 17 and outputs the digital audio signal to a audio processor 18.

Among the above processors, the synthesis processor 17 superimposes an on-screen display (OSD) signal on the digital image signal supplied from the signal processor 16 and outputs the result. Further, a digital image signal output from the synthesis processor 17 is supplied to an image processor 19.

The image processor 19 converts the input digital image signal to a signal of a format that can be displayed on a succeeding-stage flat-panel image display module 20 including, for example, a liquid crystal display panel or the like. Then, a display image signal output from the image processor 19 is supplied to the image display module 20 and used for image display.

Further, the audio processor 18 converts the input digital audio signal to an analog audio signal of a format that can be played back by means of a succeeding-stage speaker 21. Then, an analog audio signal output from the audio processor 18 is supplied to the speaker 21 and used for audio playback.

All of the operations including the various types of reception operations described above in the digital television broadcast reception apparatus 11 are generally controlled by means of a controller 22. The controller 22 contains a central processing unit (CPU) 22a and controls the respective modules in response to operation information from an operation module 23 set on the main body of the digital television broadcast reception apparatus 11 or in response to operation information issued from a remote controller 24 and received by a light-receiving module 25 to reflect the nature of the operation thereon.

In this case, the controller 22 uses a memory module 22b. The memory module 22b mainly includes a read-only memory (ROM) in which a control program executed by the CPU 22a is recorded, a random access memory (RAM) that provides a work area for the CPU 22a and a nonvolatile memory that stores various types of setting information items, control information items and the like.

Further, a hard disk drive (HDD) 26 is connected to the controller 22. The controller 22 can perform a control operation based on the operation of the operation module 23 or remote controller 24 by the user to encode the digital image signal and audio signal obtained from the demodulation/decoding module 15 by means of a recording/playback processor 27 and convert the same to a preset recording format, then supply the result of conversion to the HDD 26 and record the same on a hard disk 26a.

Further, the controller 22 can perform a control operation based on the operation of the operation module 23 or remote controller 24 by the user to read the digital image signal and audio signal from the hard disk 26a by use of the HDD 26 and decode the signals by use of the recording/playback processor 27, then supply the result of decoding to the signal processor 16 and use the same for image display and audio playback.

An input terminal 28 is connected to the digital television broadcast reception apparatus 11. The input terminal 28 is used to directly input a digital image signal and audio signal from the exterior of the digital television broadcast reception apparatus 11. The digital image signal and audio signal input via the input terminal 28 are supplied to the signal processor 16 after passing through the recording/playback processor 27 and then used for image display and audio playback based on the control operation of the controller 22 corresponding to the operation of the operation module 23 or remote controller 24 by the user.

Further, the digital image signal and audio signal input via the input terminal 28 are passed through the recording/playback processor 27 and then used for the recording/playback operation with respect to the hard disk 26a by means of the HDD 26 based on the control operation of the controller 22 corresponding to the operation of the operation module 23 or remote controller 24 by the user.

In this example, a card connector 29 is connected to the controller 22. For example, a media card 30 such as a Secure Digital (SD) memory card that can record and play back content such as an image, audio and the like is detachably mounted on the card connector 29.

Then, the controller 22 can read content such as an image, audio and the like from the media card 30 and use the same for image display and audio playback based on the operation of the operation module 23 or remote controller 24 by the user.

Further, the controller 22 can record received content such as an image, audio and the like or content such as an image, audio and the like input from the input terminal 28 on the media card 30 based on the operation of the operation module 23 or remote controller 24 by the user.

In addition, a Universal Serial Bus (USB) connector 31 is connected to the controller 22. On the USB connector 31, for example, a USB device 32 such as a USB memory that can record and play back content such as an image, audio and the like is detachably mounted.

Then, the controller 22 can read content such as an image, audio and the like from the USB device 32 and use the same for image display and audio playback based on the operation of the operation module 23 or remote controller 24 by the user.

Further, the controller 22 can record received content such as an image, audio and the like or content such as an image, audio and the like input from the input terminal 28 on the USB device 32 based on the operation of the operation module 23 or remote controller 24 by the user.

For example, a network interface 33 of the Digital Living Network Alliance (DLNA) specification is connected to the controller 22. The network interface 33 is connected to a DLNA server 36 on a home network 35 via an input/output terminal 34.

As a result, the controller 22 can read content such as an image, audio and the like from the DLNA server 36 and use the same for image display and audio playback based on the operation of the operation module 23 or remote controller 24 by the user.

Further, the controller 22 can record received content such as an image, audio and the like or content such as an image, audio and the like input from the input terminal 28 on the DLNA server 36 based on the operation of the operation module 23 or remote controller 24 by the user.

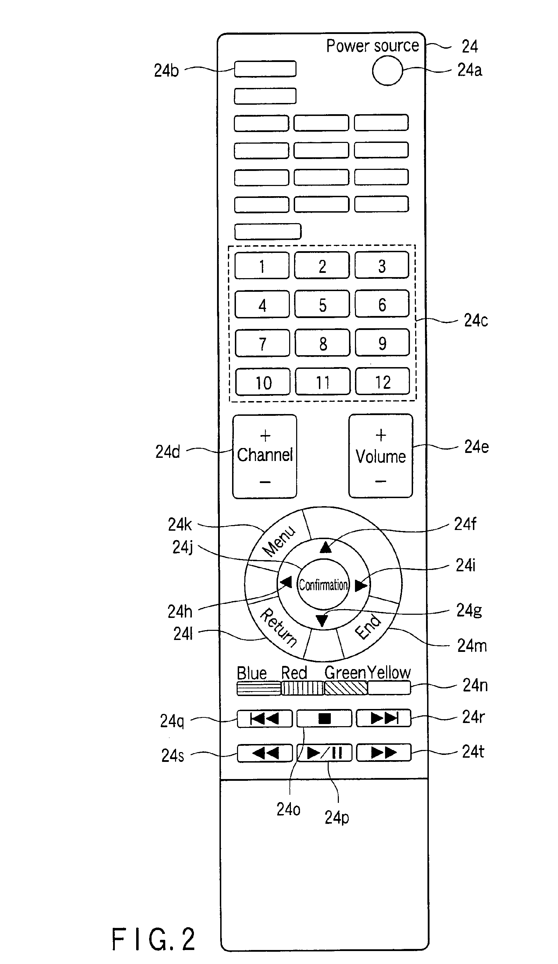

FIG. 2 shows an outer appearance of the remote controller 24. On the remote controller 24, a power source key 24a, input switching keys 24b, numeral keys 24c, channel up/down key 24d, volume adjustment key 24e, cursor-up key 24f, cursor-down key 24g, cursor-leftward key 24h, cursor-rightward key 24i, confirmation key 24j, menu key 24k, return key 241, end key 24m, four-color (blue, red, green, yellow) key 24n and the like are mainly provided.

Further, on the remote controller 24, a playback stop key 24o, playback/temporary stop key 24p, reverse skip key 24q, forward skip key 24r, fast-reversing key 24s, fast-forward key 24t and the like are provided.

That is, the playback, stop or temporary stop operation can be performed for content such as an image, audio and the like selectively acquired from the HDD 26, media card 30, USB device 32, DLNA server 36 or the like by operating the playback stop key 24o or playback/temporary stop key 24p of the remote controller 24.

Further, a so-called reverse skip operation or forward skip operation for skipping information such as an image, audio and the like selectively acquired from the HDD 26, media card 30, USB device 32, DLNA server 36 or the like and played back in the reverse direction or forward direction with respect to the playback direction by a preset amount at one time can be performed by operating the reverse skip key 24q or forward skip key 24r of the remote controller 24.

In addition, a so-called fast-reverse playback operation or fast-forward playback operation for continuously playing back information such as an image, audio and the like selectively acquired from the HDD 26, media card 30, USB device 32, DLNA server 36 or the like and played back at high speed in the reverse direction or forward direction with respect to the playback direction can be performed by operating the fast-reversing key 24s, fast-forward key 24t or the like of the remote controller 24.

Now, a case wherein image content recorded by use of a video camera (not shown) is recorded on the media card 30 in conformance with the high-quality moving picture recording standard is explained. In this case, for example, the high-quality moving picture recording standard is explained by taking the AVCHD [Advanced Video Coded High Definition (registered trademark)] standard as an example.

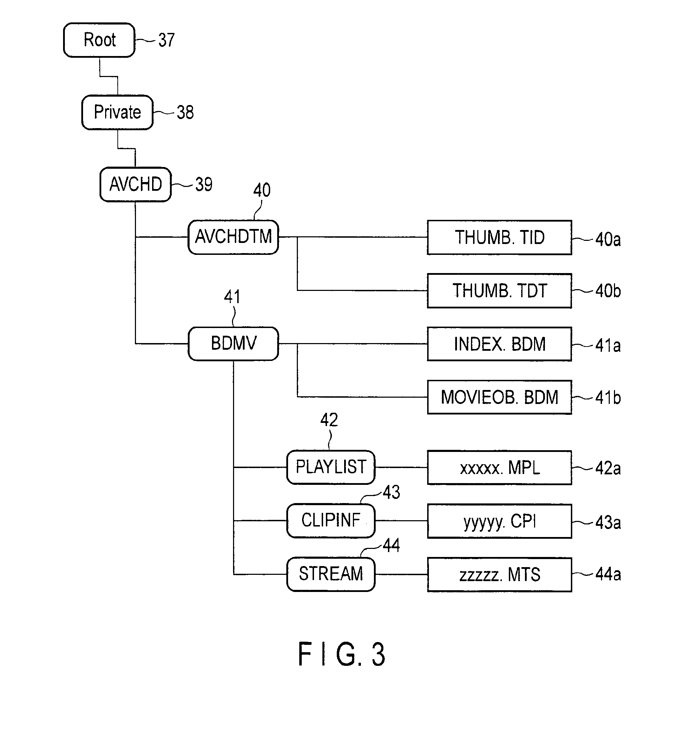

FIG. 3 shows a folder configuration when image content is recorded in conformance with the AVCHD standard by using an SD memory card as a recording medium. That is, in the AVCHD standard, a Private folder 38 inherent to the AVCHD standard is present under the layer of a Root folder 37.

An AVCHDTN folder 40 and BDNV folder 41 are arranged below the layer of the Private folder 38 via an AVCHD folder 39. Among them, in the AVCHDTN folder 40, a THUMB.TID file 40a that is thumbnail management information and a THUMB.TDT file 40b that is a main body of thumbnail information are contained.

Further, an INDEX.BDM file 41a that is an index table and a MOVIEOB.BDM file 41b that is a navigation command are contained in the BDNV folder 41.

A PLAYLIST folder 42 is arranged under the layer of the BDNV folder 41 and an MPL file 42a is contained in the PLAYLIST folder 42. In the MPL file 42a, date information of the playlist is present in the extension data part thereof.

Further, a CLIPINF (clip information) folder 43 is arranged under the layer of the BDNV folder 41 and a CPI file 43a is contained in the CLIPINF (clip information) folder 43. In the CPI file 43a, information such as photographing start time (start time) and photographing end time (end time) of image content is present.

Additionally, a STREAM folder 44 is arranged under the layer of the BDNV folder 41 and an MTS file 44a having image content recorded in the transport stream (TS) form is contained in the STREAM folder 44.

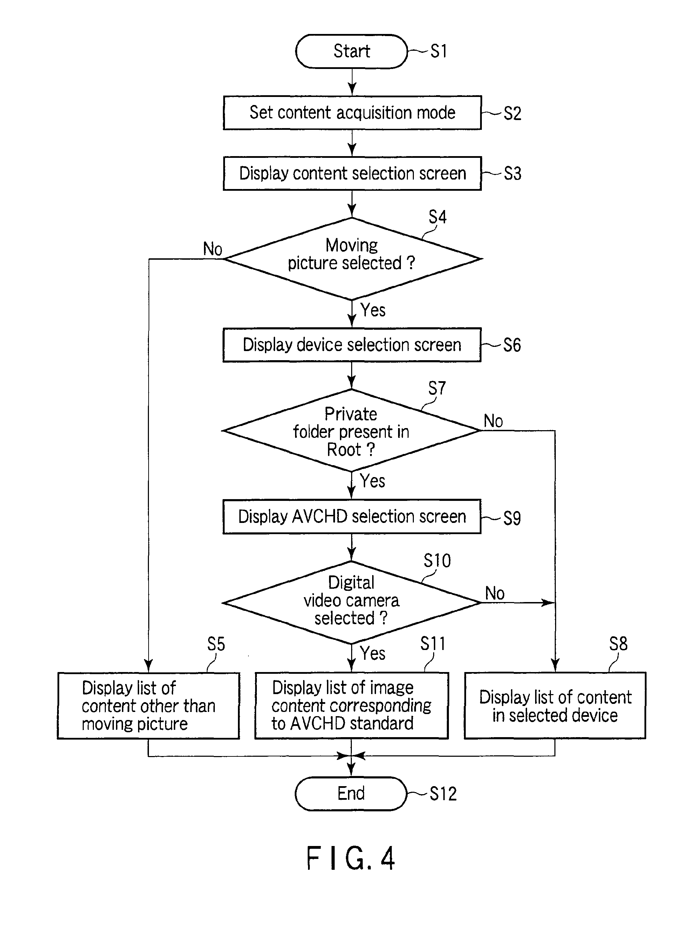

FIG. 4 is a flowchart for collectively illustrating a main processing operation performed when the controller 22 selectively acquires content recorded in the media card 30, USB device 32 and DLNA server 36 and plays back the same. Image content photographed by a video camera cannot be recorded directly in the USB device 32 or DLNA server 36 though such direct recording is possible in the case of the media card 30. For this reason, the controller 22 copies the AVCHD-standard folder structure obtained by the video camera to the USB device 32 and DLNA server 36, in such a manner that the controller 22 can perform similar processing for the USB device 32 and the DLNA server 36 as it does for the media card 30. That is, when the process is started (step S1), the user sets a mode in which content is acquired from the media card 30, USB device 32 and DLNA server 36 in step S2.

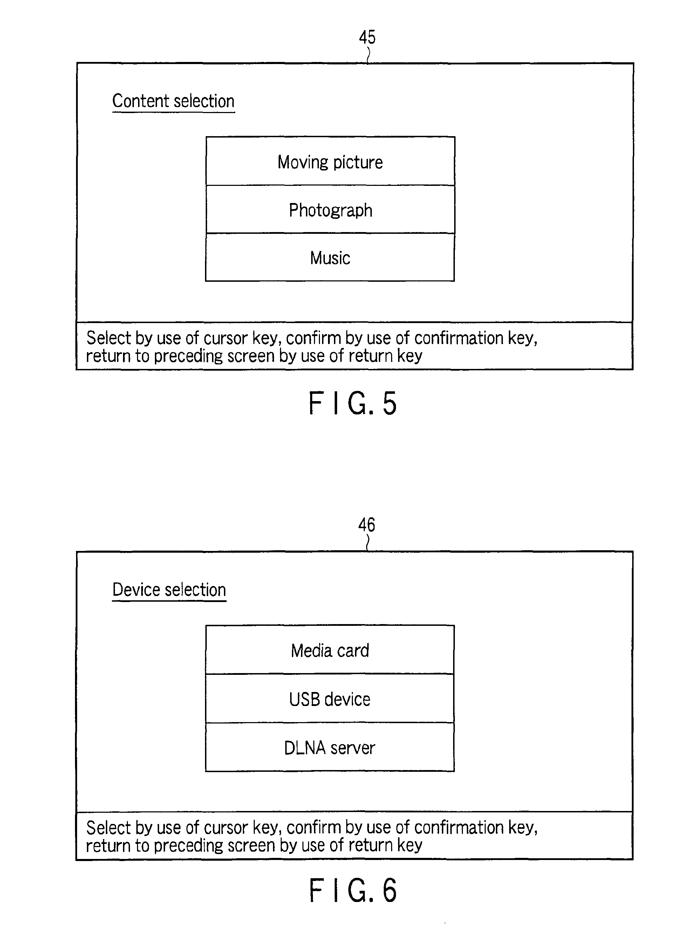

Then, the controller 22 displays a content selection screen 45 shown in FIG. 5 as an example on the image display module 20 in step S3 and permits the user to select the type of content to be displayed. The content selection screen 45 displays three items corresponding to a moving picture (movie), photograph (photo) and music and the user can determine the type of content to be displayed by operating the cursor-up key 24f or cursor-down key 24g of the remote controller 24 to select a desired item and operating the confirmation key 24j.

After this, the controller 22 determines in step S4 whether or not a moving picture is selected on the content selection screen 45. If it is determined that the moving picture is not selected (NO), the controller 22 displays a list of content other than the image content corresponding to the moving picture among the content recorded in the media card 30, USB device 32 and DLNA server 36 on the image display module 20 in step S5 and terminates the process (step S12).

Further, if it is determined in step S4 that the moving picture is selected (YES), the controller 22 displays a device selection screen 46 shown in FIG. 6 as an example on the image display module 20 in step S6 and permits the user to select a device from which image content is acquired. The device selection screen 46 displays three items corresponding to the media card 30, USB device 32 and DLNA server 36 and the user can determine the device from which image content is acquired by operating the cursor-up key 24f or cursor-down key 24g of the remote controller 24 to select a desired item and operating the confirmation key 24j.

After this, the controller 22 determines in step 7 whether or not a Private folder 38 is present under the layer of the Root folder 37 in the device (for example, media card 30) selected on the device selection screen 46. Then, if it is determined that the Private folder 38 is not present (NO), the controller 22 displays a list of content recorded in the media card 30 on the image display module 20 in step S8 and terminates the process (step S12).

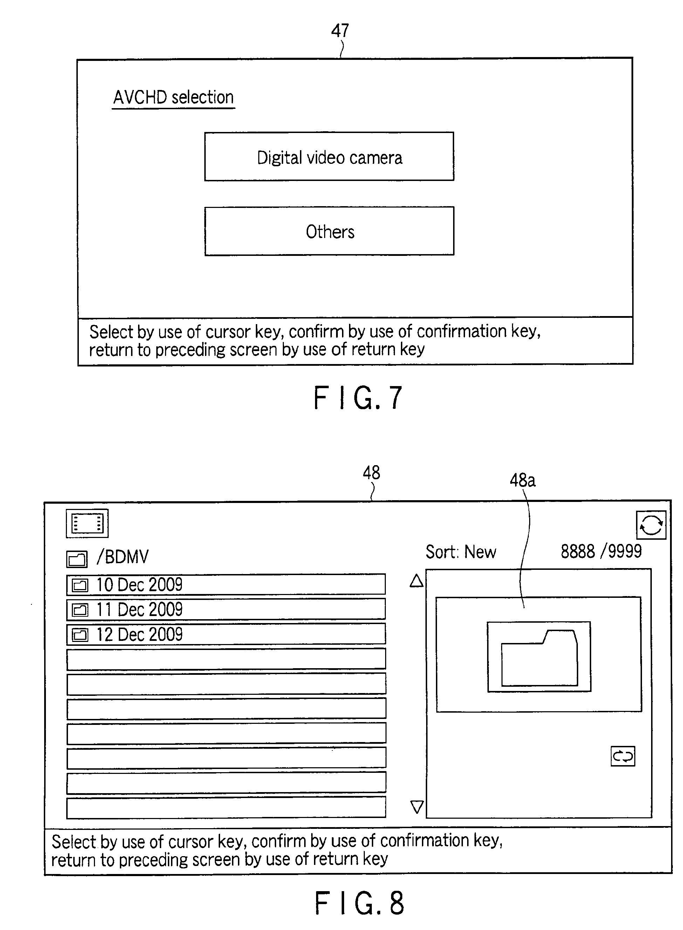

If it is determined in step S7 that the Private folder 38 is present under the layer of the Root folder 37 (YES), the controller 22 displays an AVCHD selection screen 47 shown in FIG. 7 as an example on the image display module 20 in step S9 and causes the user to select one of the operations of acquiring image content recorded in the media card 30 in conformance with the AVCHD standard and acquiring other image content.

The AVCHD selection screen 47 displays two items corresponding to a digital video camera and another device and the user can determine one of the items by operating the cursor-up key 24f or cursor-down key 24g of the remote controller 24 to select a desired item and operating the confirmation key 24j.

After this, the controller 22 determines in step S10 whether or not a digital video camera is selected on the AVCHD selection screen 47. If it is determined that the digital video camera is not selected (NO), the controller 22 displays a list of image content other than content corresponding to the AVCHD standard among the content recorded in the media card 30 on the image display module 20 in step S8 and terminates the process (step S12).

Further, if it is determined in step S10 that the digital video camera is selected (YES), the controller 22 displays a list of image content corresponding to the AVCHD standard among the content recorded in the media card 30 on the image display module 20 in step S11 and terminates the process (step S12).

FIG. 8 shows one example of a date-classified list display screen 48 displayed in step S11. In the date-classified list display screen 48, respective image content recorded in conformance with the AVCHD standard among the content recorded in the media card 30 are separately displayed in a list form for respective photographed dates on the image display module 20.

That is, as described before with reference to FIG. 3, the controller 22 can form and display the date-classified list display screen 48 by classifying respective image content items recorded in the MTS file 44a of the STREAM folder 44 for respective dates by use of date information contained in the MPL file 42a of the PLAYLIST folder 42.

If the user operates the cursor-up key 24f or cursor-down key 24g of the remote controller 24 to select an item of a desired date on the date-classified list display screen 48, the controller 22 functions to display the first image of the image content first photographed on the above date in a monitor region 48a.

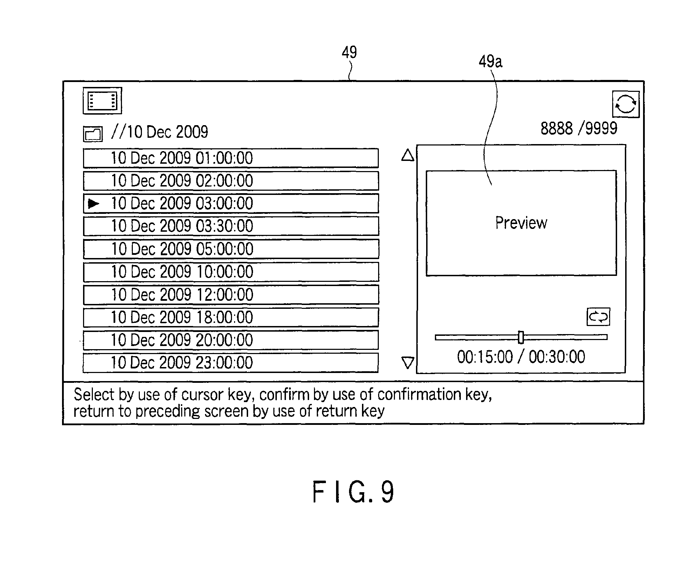

Further, if the user operates the cursor-up key 24f or cursor-down key 24g of the remote controller 24 to select an item of a desired date and operates the confirmation key 24j on the date-classified list display screen 48, the controller 22 can form and display a time-classified list display screen 49 on which respective image content items photographed on a selected date are separately displayed in a list form for respective photographed times as shown in FIG. 9 as one example.

That is, the controller 22 can form and display a time-classified list display screen 49 by further classifying respective image content items classified for respective dates by use of date information contained in the MPL file 42a of the PLAYLIST folder 42 according to the photographed date by use of information indicating photographing start time (start time) and contained in the CPI file 43a of the CLIPINF (clip information) folder 43.

If the user operates the cursor-up key 24f or cursor-down key 24g of the remote controller 24 to select an item of desired time on the time-classified list display screen 49, the controller 22 functions to display a moving picture based on the image content that is started to be photographed at the above time in a monitor region 49a.

Further, if the user operates the cursor-up key 24f or cursor-down key 24g of the remote controller 24 to select an item of desired time and operates the confirmation key 24j on the time-classified list display screen 49, the controller 22 functions to display a moving picture based on the image content that is started to be photographed at the selected time on substantially the entire portion of the screen of the image display module 20.

According to the above embodiment, the respective image content items recorded in the STREAM folder 44 are classified for respective dates and displayed in a list form or classified for respective photographed times in the case of the same date and displayed in a list form by use of date information recorded in the PLAYLIST folder 42 or information indicating the photographing start time and recorded in the CLIPINF (clip information) folder 43.

Therefore, when image content recorded in conformance with the AVCHD standard is played back, the operation of searching for image content to be played back becomes easy and the apparatus can be conveniently dealt with by the user and can be sufficiently put to practical use.

In this respect, at present, since information of each folder is displayed with the folder configuration kept recorded on the recording medium, the operation of searching for desired image content from a large amount of image content becomes complicated. Further, since it is difficult for the user to understand the nature of each file contained in the STREAM folder 44 even if he sees the file name thereof, the image content searching operation becomes complicated in this respect.

In the above embodiment, a list is formed in which recorded image content items are classified for respective photographed dates thereof, but this is not limitative. For example, a list having image content items classified for respective settings of photographing may be formed by forming a new playlist when the setting of a photographing device is changed.

Further, in the AVCHD standard, a recording medium on which image content is to be recorded is specified to an SD memory card, memory stick, specified server on Internet or the like. On the other hand, according to the above embodiment, if information recorded on the SD memory card in conformance with the AVCHD standard is held in the USB device 32 or DLNA server 36 with the folder configuration of the AVCHD standard kept unchanged, the date-classified and time-classified list display screens 48, 49 shown in FIG. 8 and FIG. 9 can be displayed. Therefore, the apparatus can be conveniently dealt with by the user and can be sufficiently put to practical use.

## Claims

1. An image playback apparatus comprising:
a connector (29) configured to enable connection of a recording medium (30, 32, 36) that records image content and attribute information in different folders in conformance with a recording standard of moving picture image content, and
a forming module (22) configured to form a list in which the respective image content items recorded on the recording medium (30, 32, 36) are classified based on attribute information recorded in a preset folder of the recording medium (30, 32, 36).

2. The image playback apparatus of Claim 1, **characterized by** further comprising a display module (20) configured to display a list of image content formed by the forming module (22) .

3. The image playback apparatus of Claim 1 or 2, **characterized by** further comprising a selection module (20, 22, 24) configured to determine whether a folder inherent to the moving picture image content recording standard is present in the recording medium (30, 32, 36) and select one of operations of playing back image content recorded in conformance with the moving picture image content recording standard in the recording medium (30, 32, 36) and playing back other image content.

4. The image playback apparatus of Claims 1 to 3, **characterized in that** the forming module (22) is configured to form one of a list in which the respective image content items recorded on the recording medium (30, 32, 36) are classified for respective photographed dates and a list in which the respective image content items are classified for respective settings of photographing.

5. The image playback apparatus of Claim 4,
**characterized in that** the forming module (22) is configured to form a list in which respective image content items photographed on a date are classified for respective photographed times when the above date is selected from a list in which the respective image content items recorded on the recording medium (30, 32, 36) are classified for respective photographed dates.

6. The image playback apparatus of one of the preceding Claims, **characterized in that** the moving picture image content recording standard is an AVCHD standard.

7. The image playback apparatus of Claim 6, **characterized in that** the forming module (22) is configured to form a list in which the respective image content items recorded in a stream folder in the recording medium (30, 32, 36) are classified for respective photographed dates based on date information recorded in a playlist folder in the recording medium (30, 32, 36).

8. The image playback apparatus of Claim 7, **characterized in that** the forming module (22) is configured to form a list in which respective image content items photographed on a date are classified for respective photographed times based on information indicating photographed time recorded in a clip information folder in the recording medium (30, 32, 36) when the above date is selected from a list in which the respective image content items recorded on the recording medium (30, 32, 36) are classified for respective photographed dates.

9. An image playback method for playing back a recording medium (30, 32, 36) on which image content and attribute information thereof is recorded in different folders in conformance with a recording standard of moving picture image content, **characterized by** comprising:
determining (S7) whether a private folder inherent to the moving picture image content recording standard is present in the recording medium (30, 32, 36),
selecting (S9, S10) one of operations of playing back image content recorded in conformance with the moving picture image content recording standard in the recording medium (30, 32, 36) and playing back other image content when the private folder is present, and
forming (S11) a list in which the respective image content items recorded in conformance with the moving picture image content recording standard in the recording medium (30, 32, 36) are classified based on attribute information recorded in a preset folder of the recording medium (30, 32, 36) when the operation of playing back the image content recorded in conformance with the moving picture image content recording standard is selected.
